# EUROPEAN PATENT APPLICATION

(11) **EP 2 604 855 A1**
(43) Date of publication of application: **19.06.2013**
(21) Application number: 11193240.6
(22) Date of filing: 13.12.2011
(51) Int. Cl.: F03D 9/00, H02K 7/18, H02K 15/03, H02K 1/27

(54) **Rotor for a generator**

(71) Applicant: Siemens Aktiengesellschaft, 80333 München (DE)
(72) Inventor: Valbjoern, Jesper, 6000 Kolding (DK)

(57) **Abstract**

Rotor (1) for a generator, comprising a number of axially adjacently disposed ring-like shaped rotor segments (1a ― 1f), whereby each rotor segment (1a ― 1f) comprises a number of circumferentially adjacently disposed magnet elements (2), wherein at least two respective rotor segments (1a ― 1f) are disposed with a circumferential offset (d2) relative to each other so that the magnet elements (2) of the at least two respective rotor segments (1a ― 1f) are circumferentially offset relative to each other.

## Description

The invention relates to a rotor for a generator, comprising a number of axially adjacently disposed ring-like shaped rotor segments, whereby each rotor segment comprises a number of circumferentially adjacently disposed magnet elements.

The phenomenon of cogging torque is widely known in the field of electric machines such as generators or electric motors. Cogging torque effects are essentially based on interactions between magnet elements, i.e. particularly permanent magnet elements, of the rotor and the stator slots of the stator during operation of the electric machine.

A known approach to reduce cogging torque is skewing of respective magnet elements of the rotor, i.e. orientating the magnet elements with a certain inclination relative to the surface of the rotor. However, this approach usually leads to the generation of axial forces which may result in the generation of vibrations within the rotor and further the entire electric machine. The latter effect is particularly a problem in large-scaled generators such as used in modern wind turbines.

Respective axial forces may be avoided by arranging the magnet elements in a double-skewed pattern, i.e. respective circumferentially adjacently disposed magnet elements are arranged with oppositely oriented inclinations leading to a V-like arrangement. Yet, regarding the respective double-skewed arrangement of respective magnet elements, the provision of usually T-shaped fastening grooves within the rotor, which fastening grooves are adapted to securely fasten respective magnet elements to the rotor, are hard and cumbersome to manufacture.

It is the object of the invention to provide an improved rotor, particularly regarding a double-skewed arrangement of respective magnet elements.

This is inventively achieved by a rotor as initially described, which is characterised in that at least two respective rotor segments are disposed with a circumferential offset relative to each other so that the magnet elements of the at least two respective rotor segments are circumferentially offset relative to each other.

The inventive rotor comprises a number of ring-like shaped rotor segments in an axial adjacent arrangement, i.e. the rotor segments are axially disposed one after another. Each respective rotor segment is provided with a number of magnet elements, particularly magnet elements made of permanent magnetic material such as NdFeB for instance, disposed on its outer parameter, i.e. its surface area. Hence, the magnet elements radially extend off the respective surface area of a respective rotor segment. The magnet elements are particularly attached in respective axially extending fastening grooves provided with the outer parameter of a respective rotor segment. The number and circumferential distance of respective magnet elements per rotor segment is generally arbitrary. Yet, a uniform arrangement of magnet elements is preferred for a respective rotor segment. The magnet elements may perpendicularly extend off the surface of a respective rotor segment, which has advantages due to an eased manufacturing of respective fastening grooves within the surface of a respective rotor segment. However, it is also feasible that the magnet elements are oriented with a certain angle, i.e. inclined relative to the surface of the respective rotor segment which arrangement is known as skewing.

At least two, preferably all, rotor segments building the inventive rotor when axially assembled are arranged with a certain circumferential offset relative to each other. Consequently, the magnet elements of the respective rotor segments are also arranged with a certain circumferential offset relative to each other. In such a manner, the magnet elements of the respective rotor segments being circumferentially offset relative to each other are arranged at different circumferential positions, i.e. are not arranged "in line".

Hence, the respective circumferential offset of rotor segments allows a double-skewed arrangement of respective magnet elements being allocated to respective circumferentially offset rotor segments. Thus, the rotor segments of the inventive rotor are usually the same components without the need of cumbersome machining in order to obtain a respective double-skewed arrangement of respective magnet elements.

Generally, the circumferential offset of rotor segments may concern directly axially adjacently disposed rotor segments or not directly axially adjacently disposed rotor segments. I.e. it is possible that two directly axially adjacently disposed rotor segments are disposed with no circumferential offset, and a third rotor segment may be disposed with a certain circumferential offset relative to the two rotor segments.

The degree of circumferential offset of respective rotor segments is preferably the same for all respective rotor segments. Yet, it is also possible that the degree of circumferential offset of respective rotor segments differs along the rotor.

The circumferential offset is preferably provided by positioning means interconnecting at least two respective axially adjacently disposed rotor segments. The positioning means allows the adjustment of an exact circumferential offset of respective rotor segments. Thereby, a respective positioning means may adjust a respective circumferential offset of two or more directly axially adjacently disposed rotor segments which will be explained below in detail.

An exemplary embodiment of a respective positioning means is a pin element adapted to engage axial bores provided with at least one face side of a respective rotor segment. The bores are preferably circumferentially uniformly disposed at at least one face side of a respective rotor segment. The number of respective bores is generally arbitrary. It is to be noted that the position and circumferential distance between the bores define the possible circumferential offset of the respective axially adjacently disposed rotor segments. The bores may be through-bores, which completely axially penetrate a respective rotor segment, or blind bores, which penetrate a respective rotor segment only to a certain degree, but not completely.

If the respective bores of axially directly adjacently disposed rotor segments are through-bores, a respective pin element may adjust a circumferential offset of more than two respective directly axially adjacently disposed rotor segments.

As an example, when regarding three respective directly axially adjacently disposed rotor segments sharing the same circumferential arrangement of respective magnet elements on their outer perimeter and each having 24 respective axial through-bores, i.e. through-bores at every 15°, a respective longitudinal pin element may penetrate the through-bore of a first rotor segment located at 0°, the respective through-bore of an axially successive second rotor segment located at 15°, and the through-bore of an axially successive third rotor segment located at 30°. I.e., the second rotor segment is circumferentially offset by 15° relative to the first rotor segment, and the third rotor segment is circumferentially offset by 30° relative to the first rotor segment, and circumferentially offset by 15° relative to the second rotor segment, respectively. Yet, the respective through-bores at 0°, 15° and 30° of the respective rotor segments are axially aligned so that they may be axially penetrated by a respective pin element. Hence, more than two directly axially adjacently disposed rotor segments may be interconnected by a single pin element. The principle may be transferred to more than three respective rotor segments.

If the respective bores of directly axially adjacently disposed rotor segments are blind bores, the pin element may only interconnect two respective directly axially adjacently disposed rotor segments.

In either case, both the respective bores and the pin elements may be provided with corresponding threads. In such a manner, the pin elements may also contribute to a mechanically stable interconnection of respective rotor segments.

Additionally or alternatively, a respective positioning means may be a lug or protrusion axially extending off at least one face side of a respective rotor segment, the lug being adapted to engage an axial bore provided with at least one face side of a respective axially adjacently disposed rotor segment. The connecting principle of respective axially adjacently disposed rotor segments is the same as mentioned above concerning the positioning means in the shape of the pin element. It is to be noted that a respective rotor segment may be provided with respective lugs at only one or both face sides. I.e., in the first case, the first face side may be provided with respective bores, whereas an opposing second face side may be provided with respective lugs. In the second case, both face sides are provided with respective lugs, i.e. only further rotor segments having respective bores at their face sides may be axially adjacently connected thereto. It is also possible that both lugs and bores are provided at the same face side of a rotor segment. In this case, the respective bores and lugs are preferably circumferentially uniformly distributed.

The rotor segments may be mounted to each other by means of a mounting means, particularly a bolted screw, penetrating through respective axial bores within the respective rotor segments. The axial bores are built as through-bores so that the mounting means may entirely axially penetrate the rotor. The mounting means may be understood as a tension element, which firmly holds the respective axially adjacently disposed rotor segment together. Thereby, releasable or non-releasable connections of respective axially adjacently disposed rotor segments are feasible. Both the mounting means, i.e. particularly a respective bolted screw, and the bores may be provided with corresponding threads.

As mentioned before, the magnet elements of a respective rotor segment may radially extend off the rotor segments with a certain inclination relative to the surface of the respective rotor segment. Thereby, the inclination of circumferentially adjacently disposed magnet elements may be oriented in the same direction or opposite directions.

If the magnet elements of a respective rotor segment may radially extend off the rotor segments with a certain inclination relative to the surface of the respective rotor segment, the magnet elements of axially adjacently disposed rotor segments may be disposed with oppositely oriented inclinations. In such a manner, the principle of a respective double-skewed design of magnet elements of directly adjacently disposed rotor segments may be attained in that the magnet elements of a first rotor segment may be oriented in a first direction, i.e. a certain degree in clockwise direction for instance, whereas the magnet elements of a second rotor segment directly axially abutting the first rotor segment may be oriented in a second direction, i.e. the same degree in anti-clockwise direction, etc.

It is preferred that the axial dimensions of a respective magnet element correspond to the axial dimensions of a respective rotor segment. In such a manner, the width of a respective rotor segment and the length of a respective magnet element correspond to each other. Consequently, it is possible that the dimensions of the magnet elements exactly match the dimensions of the respective rotor segment.

Aside, the invention relates to a generator, particularly for a direct drive wind turbine, the generator comprising a rotor as described before. All annotations regarding the inventive rotor also apply to the inventive generator.

The invention is described in detail as reference is made to the principle drawings, whereby:
- fig. 1: shows a top-view of a rotor according to an exemplary embodiment of the invention;
- fig. 2: shows an exploded view of the rotor according to fig. 1;
- fig. 3: shows a front view of a rotor segment of a rotor according to an exemplary embodiment of the invention; and
- fig. 4-6: show axial cut-views of a number of axially adjacently disposed rotor segments according to further exemplary embodiments of the invention.

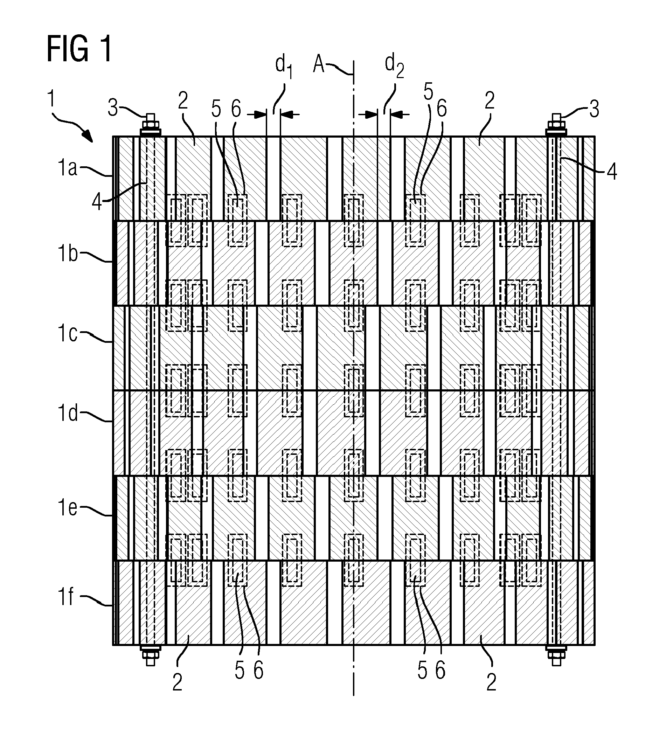

Fig. 1 shows a top-view of a rotor 1 according to an exemplary embodiment of the invention. The rotor 1 is part of an electric machine such as particularly a generator, which generator may be used in a wind turbine, particularly a direct drive wind turbine. The centre axis of the rotor 1 is denoted as A.

The rotor 1 comprises a number, i.e. six axially adjacently disposed ring-like shaped rotor segments 1a ― 1f. Each rotor segment 1a ― 1f comprises a number of circumferentially adjacently disposed magnet elements 2, i.e. particularly permanent magnet elements 2 made of a permanent magnetic material such as NdFeB. The magnet elements 2 are circumferentially uniformly distributed at the outer perimeter, i.e. the surface of each respective rotor segment 1a ― 1f. The circumferential gap between circumferentially adjacently disposed magnet elements 2 is denoted as d1.

Each rotor segment 1a ― 1f comprises axially extending T-shaped fastening grooves (not shown) which are adapted to receive a respective magnet element 2 and hold it stably to the respective rotor segment 1a ― 1f. Thereby, the axial dimensions of the magnet elements 2 correspond to the axial dimensions of a respective rotor segment 1a ― 1f, i.e. the axial length of a respective magnet element 2 corresponds to the axial width of a respective rotor segment 1a ― 1f.

As is discernible from fig. 1, axial attachment of the respective rotor segments 1a ― 1f is provided by means of a bolted connection, i.e. mounting means in the shape of bolted screws 3 axially penetrating through respective axial through-bores 4 (dotted) within the respective rotor segments 1a - 1f. Both the through-bores 4 and the screws 3 may be provided with corresponding threads.

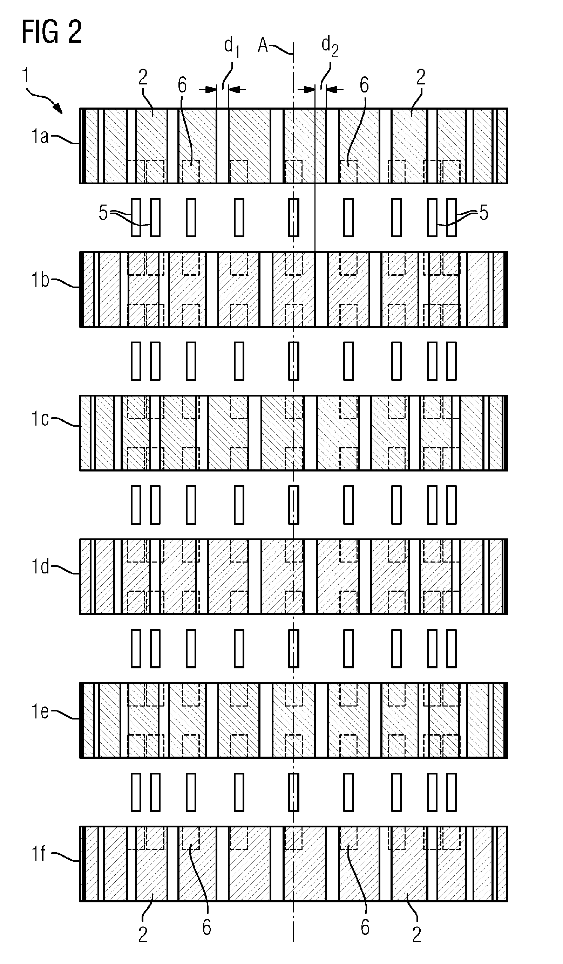

As is discernible from fig. 1, 2, the respective rotor segments 1a ― 1f are disposed with a circumferential offset d2 relative to each other. The circumferential offset d2 may be ca. 15° for instance. I.e., when regarding the rotor segment 1b, rotor segment 1a is disposed with a circumferential offset d2 relative to rotor segment 1b in clockwise direction, whereas rotor segment 1c is disposed with a circumferential offset d2 relative to rotor segment 1b in anti-clockwise direction. The same applies when regarding rotor segment 1e, i.e. rotor segment 1f is disposed with a circumferential offset d2 relative to rotor segment 1e in clockwise direction, whereas rotor segment 1d is disposed with a circumferential offset d2 relative to rotor segment 1e in anti-clockwise direction. In the same manner, the respective magnet elements 2 disposed on the respective rotor segments 1a ― 1c and 1d ― 1f, are circumferentially offset relative to each other.

Thus, the respective magnet elements 2 of directly adjacently disposed rotor segments 1a ― 1f, are arranged in terms of double-skewing, i.e. are arranged in a V-shaped pattern without the need of providing the rotor segments 1a ― 1f with specially designed fastening grooves.

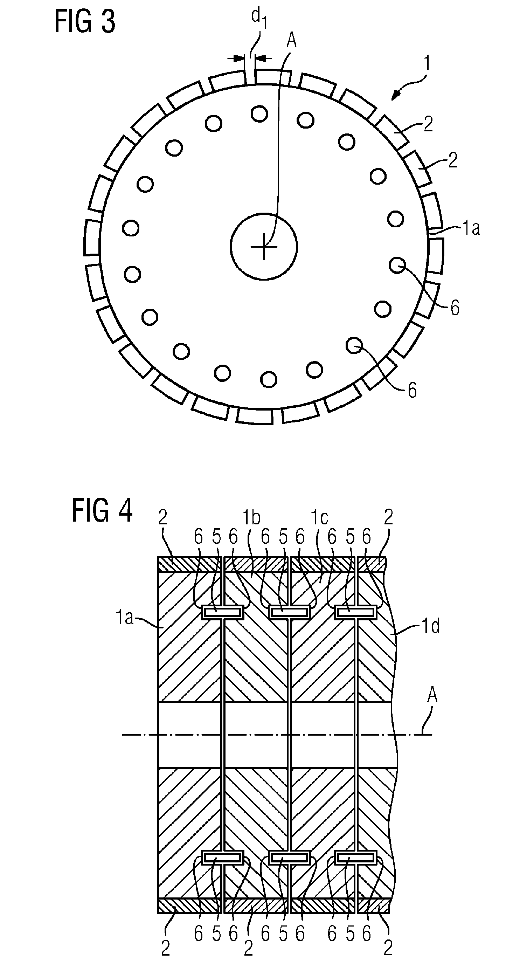

With regard to fig. 2, the circumferential offset d2 is provided by positioning means interconnecting at least two respective axially adjacently disposed rotor segments 1a ― 1f. A respective positioning means is built as a pin element 5 and is adapted to engage axial blind bores 6 provided with at least one face side of a respective rotor segment 1a ― 1f (cf. fig. 3). The blind bores 6 are circumferentially uniformly distributed at the respective face sides of the rotor segments 1a ― 1f and share the same radial positions emanating from the centre axis A of the rotor 1. In such a manner, the pin element 5 interconnects two directly axially adjacently disposed rotor segments 1a ― 1f while additionally exactly adjusting the circumferential offset d2 of the respective rotor segments 1a ― 1f relative to each other. Both blind bores 6 and pin elements 5 may be provided with corresponding threads. The connecting principle of a number of respective axially adjacently disposed rotor segments 1a ― 1c is also shown in fig. 4 in an axial cut-view.

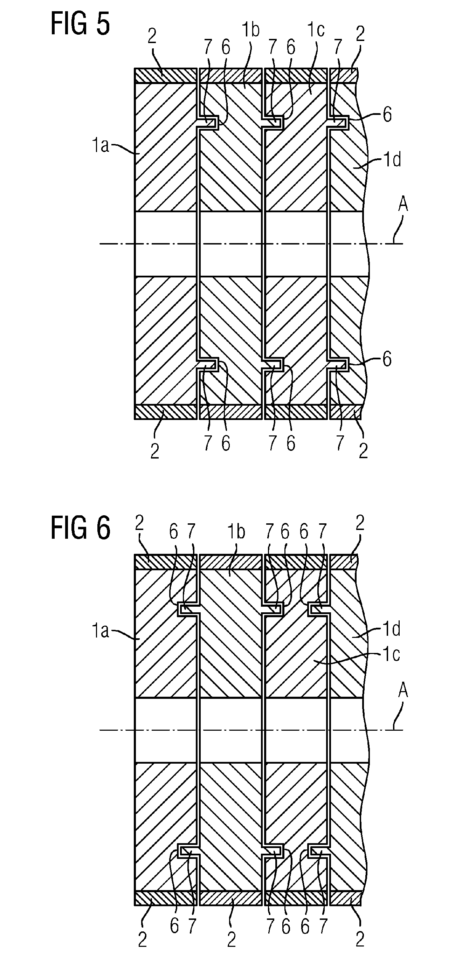

Fig. 5 shows an alternative embodiment of a number of respective rotor segments 1a ― 1c. The essential difference to the aforementioned rotor segments 1a ― 1f shown in fig. 1 - 4 lies in the design of the positioning means, which is built in two types in the embodiment of fig. 5. The first type has already been described with reference to fig. 2, 4, whereby a positioning means is a respective pin element 5. Yet, a respective positioning means may also be in the shape of an axially extending lug 7, with the lug 7 axially extending off the face side of a respective rotor segment 1a ― 1c. The embodiment of fig. 5 shows respective rotor segments 1a ― 1c having both blind bores 6 and lugs 7, whereby one face side is provided with respective blind bores 6 and an opposing face side is provided with respective lugs 7.

Fig. 6 shows a further embodiment of respective rotor segments 1a ― 1c. Thereby, rotor segment 1a is provided with respective lugs 7 at both face sides, whereas rotor segment 1b is provided with respective blind bores 6 at both face sides. In such a manner, an axially alternating arrangement of respective rotor segments 1a ― 1c is necessary.

As has been mentioned before, the respective magnet elements 2 may perpendicularly extend off the surface of the respective rotor segments 1a ― 1f. Yet, it is possible that the magnet elements 2 of a respective rotor segment 1a ― 1f radially extend off the surface of the rotor segments 1a ― 1f with a certain inclination (skewing). Thereby, the inclination of circumferentially directly adjacently disposed magnet elements 2 may be oriented in the same direction or opposite directions. Aside, it is possible, that the magnet elements 2 of axially adjacently disposed rotor segments 1a ― 1f may be disposed with oppositely oriented inclinations.

Although the present invention has been described in detail with reference to the preferred embodiment, the present invention is not limited by the disclosed examples from which the skilled person is able to derive other variations without departing from the scope of the invention.

## Claims

1. Rotor (1) for a generator, comprising a number of axially adjacently disposed ring-like shaped rotor segments (1a ― 1f), whereby each rotor segment (1a ― 1f) comprises a number of circumferentially adjacently disposed magnet elements (2), **characterised in that** at least two respective rotor segments (1a ― 1f) are disposed with a circumferential offset (d2) relative to each other so that the magnet elements (2) of the at least two respective rotor segments (1a ― 1f) are circumferentially offset relative to each other.

2. Rotor according to claim 1, wherein the circumferential offset (d2) is provided by positioning means interconnecting at least two respective axially adjacently disposed rotor segments (1a ― 1f).

3. Rotor according to claim 2, wherein a positioning means is a pin element (5) adapted to engage axial bores (6) provided with at least one face side of respective rotor segments (1a - 1f).

4. Rotor according to claim 2 or 3, wherein a positioning means is a lug (7) axially extending off at least one face side of a respective rotor segment (1a ― 1f), the lug (7) being adapted to engage an axial bore (6) provided with at least one face side of a respective axially adjacently disposed rotor segment (1a ― 1f).

5. Rotor according to one of the preceding claims, wherein the rotor segments (1a ― 1f) are mounted to each other by means of a mounting means, particularly a bolted screw (3), penetrating through respective axial bores (4) within the respective rotor segments (1a ― 1f).

6. Rotor according to one of the preceding claims, wherein the magnet elements (2) of a respective rotor segment (1a ― 1f) radially extend off the rotor segments (1a ― 1f) with a certain inclination relative to the surface of the respective rotor segment (1a ― 1f), whereby the inclination of circumferentially adjacently disposed magnet elements (2) is oriented in the same direction or opposite directions.

7. Rotor according to one of the preceding claims, wherein the magnet elements (2) of a respective rotor segment (1a ― 1f) radially extend off the rotor segments (1a ― 1f) with a certain inclination relative to the surface of the respective rotor segment (1a ― 1f), whereby the magnet elements (2) of axially adjacently disposed rotor segments (1a ― 1f) are disposed with oppositely oriented inclinations.

8. Rotor according to one of the preceding claims, wherein the axial dimensions of a respective magnet element (2) correspond to the axial dimensions of a respective rotor segment (1a ― 1f).

9. Generator, particularly for a direct drive wind turbine, comprising a rotor (1) according to one of the preceding claims.
